# FASCICULE DE BREVET EUROPEEN

(11) **EP 1 006 299 B1**
(45) Date de publication et mention de la délivrance du brevet: **23.06.2004**
(21) Numéro de dépôt: 99402950.2
(22) Date de dépôt: 26.11.1999
(51) Int. Cl.: F16J 15/00, F16J 15/32

(54) **Joint d'étanchéité pour arbre tournant, et dispositif comportant un tel joint**
Dichtungsanordnung für rotierende Wellen
Sealing arrangement for rotating shafts

(30) Priorité: 01.12.1998 FR 9815128
(43) Date de publication de la demande: 07.06.2000
(73) Titulaire: HUTCHINSON, 75008 Paris (FR)
(72) Inventeur: Crapart, René, 49500 Ste Gemmes D'Audigne, Segre (FR)
(74) Mandataire: Burbaud, Eric

(56) Documents cités:
- DE-A- 4 105 746
- FR-A- 1 437 899
- FR-A- 2 408 081
- GB-A- 1 202 061
- US-A- 4 550 920

## Description

La présente invention est relative aux joints d'étanchéité pour arbres tournants, et aux dispositifs comportant de tels joints.

Plus particulièrement, l'invention concerne un joint d'étanchéité destiné à être interposé entre, d'une part, un carter ayant un volume intérieur rempli de lubrifiant liquide soumis à une certaine pression, et d'autre part, un arbre sortant dudit carter et tournant autour d'un axe longitudinal avec une certaine vitesse de rotation, ce joint d'étanchéité comprenant une première lèvre d'étanchéité annulaire qui est destinée à être solidarisée avec le carter et à être en contact rotatif glissant avec l'arbre, la première lèvre d'étanchéité étant adaptée pour résister à une première pression limite de lubrifiant inférieure à 1 bar, et pour permettre des vitesses de rotation de l'arbre supérieures à 5000 t/mn (tours par minute).

Le document EP-A-0 189 723 décrit un exemple d'un tel joint d'étanchéité, qui convient parfaitement lorsque le lubrifiant contenu dans le carter est sous faible pression.

Mais ce joint d'étanchéité qui ne convient plus lorsque ce lubrifiant se trouve à une relativement haute pression, par exemple supérieure à 5 bars et généralement de 10 à 20 bars, ce qui est le cas notamment lorsque le joint d'étanchéité équipe un palier à lubrification sous pression, en particulier un palier de convertisseur de boîte de vitesse automatique pour véhicule automobile.

Par ailleurs, le document GB-A-1 202 061 décrit un joint d'étanchéité destiné à être interposé entre, d'une part, un carter ayant un volume intérieur rempli de lubrifiant liquide soumis à une certaine pression, et d'autre part, un arbre sortant dudit carter et tournant autour d'un axe longitudinal avec une certaine vitesse de rotation, ce joint d'étanchéité comprenant une première lèvre d'étanchéité annulaire qui est destinée à être solidarisée avec le carter et à être en contact rotatif glissant avec l'arbre, la première lèvre d'étanchéité étant adaptée pour résister à une première pression limite de lubrifiant inférieure à 1 bar, et pour permettre des vitesses de rotation de l'arbre supérieures à 5000 t/mn, ce joint comportant en outre une deuxième lèvre d'étanchéité annulaire qui est également destinée à être solidarisée avec le carter et à être en contact glissant avec l'arbre, la deuxième lèvre d'étanchéité étant adaptée pour permettre des vitesses de rotation de l'arbre supérieures à 5000 t/mn et pour résister à une deuxième pression limite, supérieure à 5 bars, régnant dans le volume intérieur du carter, cette deuxième lèvre d'étanchéité étant destinée à être interposée entre le volume intérieur du carter et la première lèvre d'étanchéité, la deuxième lèvre d'étanchéité délimitant avec la première lèvre d'étanchéité une chambre collectrice de lubrifiant, et le joint comportant en outre des moyens de by-pass pour faire communiquer le volume intérieur de carter avec la chambre collectrice.

La présente invention a notamment pour but de proposer une nouvelle solution aux problèmes techniques susmentionnés, qui soit au moins aussi satisfaisante, voire meilleure que celle du document GB-A-1 202 061.

A cet effet, selon l'invention, un joint d'étanchéité du genre en question est caractérisé :
en ce que les moyens de by-pass comportent un ajutage calibré qui by-passe la deuxième lèvre d'étanchéité pour permettre d'injecter un débit de lubrifiant directement du volume intérieur du carter dans la chambre collectrice,
en ce que la chambre collectrice est dotée d'un passage d'évacuation de lubrifiant,
et en ce que l'ajutage calibré, la deuxième lèvre d'étanchéité et le passage d'évacuation de lubrifiant sont dimensionnés pour qu'il règne dans la chambre collectrice une pression de lubrifiant au plus égale à ladite première pression limite lorsque le lubrifiant contenu dans le volume intérieur du carter est à une pression au plus égale à la deuxième pression limite.

Grâce à ces dispositions, on obtient un joint d'étanchéité adapté pour équiper des arbres tournant à des vitesses relativement élevées, avec des pression de lubrifiant également élevées.

Dans des modes de réalisation préférés du joint selon l'invention, on peut éventuellement avoir recours en outre à l'une et/ou à l'autre des dispositions suivantes :
- la deuxième lèvre d'étanchéité est réalisée en PTFE ;
- la première lèvre d'étanchéité est réalisée en élastomère ;
- le joint comporte en outre une troisième lèvre d'étanchéité anti-poussière qui est solidaire du carter et qui est en contact rotatif glissant avec l'arbre, cette troisième lèvre d'étanchéité étant disposée à l'opposé de la chambre collectrice par rapport à la première lèvre d'étanchéité, de façon à protéger ladite première lèvre d'étanchéité ;
- l'ajutage calibré et la deuxième lèvre d'étanchéité sont dimensionnés pour qu'un débit de lubrifiant compris entre 7 et 100 l/h passe du volume intérieur du carter vers la chambre collectrice lorsqu'il règne dans ledit volume intérieur une pression comprise entre 10 et 20 bars ;
- la deuxième pression limite est comprise entre 10 et 20 bars ;
- les première et deuxième lèvres d'étanchéité sont solidaires respectivement de première et deuxième armatures rigides qui sont fixées l'une à l'autre par emboîtement serré, au moins l'une de ces armatures comportant au moins un évidement qui forme le passage d'évacuation de lubrifiant.

Par ailleurs, l'invention a également pour objet un dispositif comportant :
- un carter ayant un volume intérieur rempli de lubrifiant liquide soumis à une certaine pression,
- un arbre sortant dudit carter et tournant autour d'un axe longitudinal avec une certaine vitesse de rotation,
- et un joint d'étanchéité tel que défini ci-dessus, interposé entre l'arbre et le carter, les première et deuxième lèvres d'étanchéité du joint étant solidarisées avec le carter et étant en contact rotatif glissant avec l'arbre, la deuxième lèvre d'étanchéité étant disposée axialement entre le volume intérieur du carter et la première lèvre d'étanchéité, et l'ajutage calibré faisant communiquer directement le volume intérieur du carter avec la chambre collectrice.

Dans des modes de réalisation préférés de ce dispositif, on peut éventuellement avoir recours en outre à l'une et/ou à l'autre des dispositions suivantes :
- la deuxième lèvre d'étanchéité présente une section en forme de L, avec une première branche solidaire d'une armature rigide sensiblement perpendiculaire à l'axe longitudinal de l'arbre, et avec une deuxième branche qui s'étend vers le volume intérieur du carter sensiblement parallèlement à l'axe longitudinal de l'arbre ;
- les première et deuxième lèvres d'étanchéité sont solidaires respectivement de première et deuxième armatures rigides qui sont fixées l'une à l'autre par emboîtement serré, la deuxième armature comportant au moins un évidement qui forme le passage d'évacuation de lubrifiant, les première et deuxième armatures comportant chacune une paroi cylindrique revêtue d'élastomère qui coopère par emboîtement avec le carter pour fermer respectivement le volume intérieur du carter et la chambre collectrice, et la première armature comportant en outre un prolongement extérieur qui est solidarisé directement avec le carter ;
- les première et deuxième lèvres d'étanchéité sont solidaires respectivement de première et deuxième armatures rigides qui sont fixées l'une à l'autre par emboîtement serré, la deuxième armature comportant au moins un évidement qui forme le passage d'évacuation de lubrifiant, la première armature comportant une paroi cylindrique revêtue d'élastomère qui coopère par emboîtement avec le carter pour fermer de façon étanche la chambre collectrice, cette paroi cylindrique étant prolongée par un collet cylindrique élargi rigide qui est en contact direct avec le carter et qui coopère avec ledit carter par emboîtement à force, la deuxième armature étant solidaire d'une lèvre d'étanchéité additionnelle qui coopère avec le carter pour fermer de façon étanche le volume intérieur dudit carter ;
- les première et deuxième lèvres d'étanchéité sont solidaires respectivement de première et deuxième armatures rigides qui sont fixées l'une à l'autre par emboîtement serré avec interposition d'une couche d'étanchéité en élastomère, la deuxième armature comportant au moins un évidement qui forme le passage d'évacuation de lubrifiant, la première armature étant solidaire d'une première lèvre d'étanchéité additionnelle en élastomère qui coopère avec le carter pour fermer de façon étanche la chambre collectrice, la deuxième armature étant solidaire d'une deuxième lèvre d'étanchéité additionnelle qui coopère avec le carter pour fermer de façon étanche le volume intérieur dudit carter, la première armature étant solidarisée directement avec le carter et étant localement en appui axial contre la deuxième armature.

D'autres caractéristiques et avantages de l'invention apparaîtront au cours de la description suivante de trois de ses formes de réalisation, données à titre d'exemples non limitatifs, en regard des dessins joints.

Sur les dessins :
- la figure 1 est une vue en coupe axiale d'un dispositif d'étanchéité selon une première forme de réalisation de l'invention,
- et les figures 2 et 3 sont des vues similaires à la figure 1, dans des deuxième et troisième formes de réalisation de l'invention.

Sur les différentes figures, les mêmes références désignent des éléments identiques ou similaires.

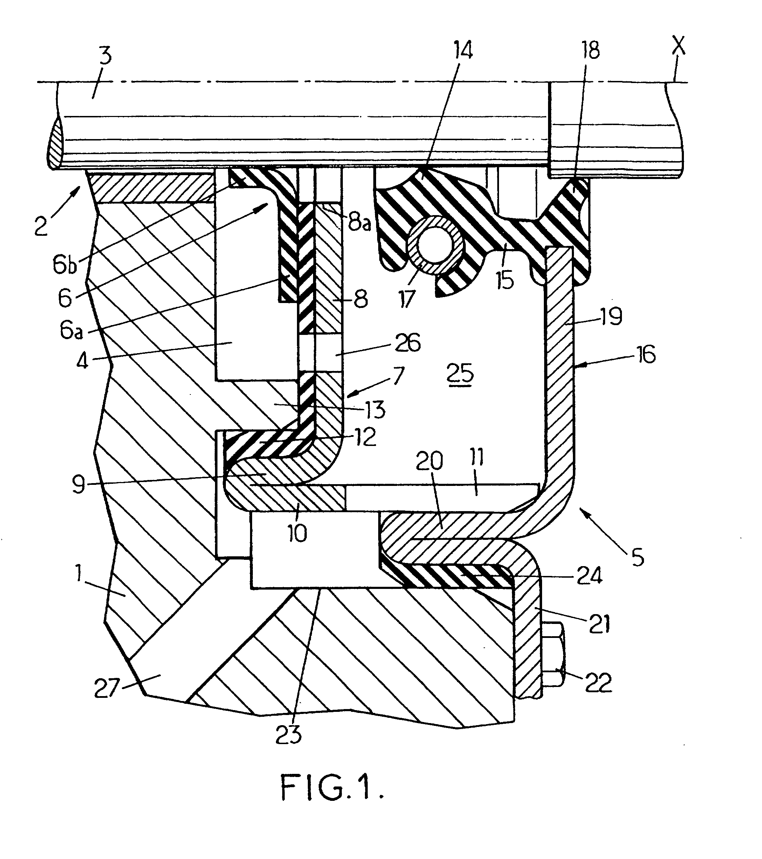

La figure 1 représente une partie d'un carter 1 au niveau d'un palier 2 traversé par un arbre 3 tournant autour d'un axe longitudinal X.

Le carter 1, qui peut par exemple appartenir à un convertisseur hydraulique de couple pour boîte de vitesses automatique de véhicule automobile, comprend un volume intérieur 4 rempli d'huile sous pression.

La pression de l'huile contenue dans le volume intérieur 4 est dans tous les cas supérieure à 5 bars et généralement comprise entre 10 et 20 bars, tandis que la vitesse de rotation de l'arbre 3 autour de l'axe X peut atteindre des valeurs supérieures à 5000 t/mn, couramment jusqu'à 8000 t/mn.

Afin d'assurer la fermeture étanche du carter 1, chaque palier 2 est pourvu d'un joint d'étanchéité 5 qui comprend tout d'abord une lèvre d'étanchéité intérieure 6, de forme symétrique de révolution autour de l'axe X. Cette lèvre 6 est portée par une armature métallique rigide 7, également symétrique de révolution autour de l'axe X.

Dans l'exemple particulier représenté sur la figure 1, l'armature 7 comporte une paroi 8 qui s'étend radialement vers l'extérieur depuis un bord intérieur 8a voisin de l'arbre 3 jusqu'à un repli axial 9. Ce repli 9 s'étend vers l'intérieur du carter 1, et il est lui-même prolongé à 180° vers l'extérieur du carter 1 par une paroi axiale 10 dans laquelle sont évidées des fentes axiales 11 ou des trous, dont l'utilité sera vue plus loin.

La face de la paroi radiale 8 qui est tournée vers l'intérieur du carter 1 et la face du repli axial 9 qui est orientée radialement vers l'intérieur sont recouvertes par une couche d'élastomère 12 qui est adhérisée sur l'armature 7.

De plus, le repli axial 9 est emboîté à force sur une paroi annulaire axiale 13 qui appartient au carter 1 et qui présente une forme cylindrique de révolution autour de l'axe X. Cette paroi annulaire 13 est en contact étanche, radialement et axialement, avec la couche d'élastomère 12.

Par ailleurs, la lèvre d'étanchéité intérieure 6 présente avantageusement une section en forme de L, avec une branche radiale 6a qui est adhérisée sur la couche d'élastomère 12 et une branche axiale 6b qui s'étend vers l'intérieur du carter 1 et qui est en contact rotatif glissant avec l'arbre 3 pour fermer le volume intérieur 4 rempli d'huile sous pression.

La lèvre d'étanchéité intérieure 6 est réalisée en un matériau adapté pour résister à la fois à la pression de l'huile contenue dans le volume intérieur 4, et à la vitesse de rotation de l'arbre 3.

A cet effet, la lèvre d'étanchéité intérieure 6 est de préférence réalisée en PTFE, avantageusement chargé en fibres de verre et en charges lubrifiantes telles que du graphite ou du MoS₂, pour limiter simultanément l'usure de la lèvre 6 et de l'arbre 3.

Par ailleurs, le joint 5 comporte en outre une lèvre annulaire d'étanchéité extérieure 14, qui présente une forme de révolution autour de l'axe X et qui est en contact rotatif glissant avec l'arbre 3, à l'extérieur de la lèvre 6. Cette lèvre 14 comporte de préférence des stries (non représentées) sur sa face en contact avec l'atmosphère, pour créer localement une surpression d'air.

Avantageusement, la lèvre d'étanchéité extérieure 14 est formée à l'extrémité libre d'un voile annulaire 15 en élastomère (caoutchouc) qui s'étend sensiblement parallèlement à l'axe X à partir d'une armature métallique rigide 16.

De préférence, l'extrémité libre du voile 15, qui forme la lèvre d'étanchéité 14, est renforcée par un ressort hélicoïdal 17 en forme de tore.

Avantageusement, le voile 15 en élastomère forme une lèvre d'étanchéité annulaire anti-poussière 18 au niveau de l'armature 16.

Dans la forme de réalisation représentée sur la figure 1, l'armature métallique 16, qui présente une forme de révolution autour de l'axe X, comporte une paroi 19 qui s'étend radialement vers l'extérieur depuis le voile 15 en élastomère jusqu'à un repli axial 20 orienté vers l'intérieur du carter 1, ce repli axial 20 étant prolongé radialement vers l'extérieur par une collerette 21 solidarisée au carter 1 par des vis 22 ou autres moyens de fixation.

Le repli axial 20 de l'armature 16 est emboîté dans une cavité cylindrique 23 du carter 1, qui est centrée sur l'axe X. Afin d'obtenir un contact étanche entre le repli 20 et la paroi interne de la cavité 23, la face radialement extérieure du repli 20 est recouverte d'une couche d'élastomère 24 qui est serrée entre le repli 20 et la paroi interne de la cavité 23.

Par ailleurs, le repli 20 est emboîté à force sur la paroi axiale 10 de l'armature 7, sans recouvrir totalement les fentes 11 de ladite paroi 10.

Une chambre collectrice d'huile 25 est délimitée axialement entre, d'une part, la lèvre d'étanchéité intérieure 6 et l'armature 7, et d'autre part, la lèvre d'étanchéité extérieure 14 et l'armature 16.

Cette chambre collectrice recueille de l'huile qui provient :
- d'une part, des légères fuites pouvant survenir au niveau de la lèvre d'étanchéité intérieure 6,
- et, d'autre part, d'un ajutage calibré 26 qui permet d'injecter dans la chambre collectrice 25 un débit d'huile prédéterminé, généralement compris entre 7 et 100 l/h.

L'ajutage calibré 26 est de préférence disposé de façon que le jet d'huile qui sort de cet ajutage ne vienne pas heurter directement la lèvre d'étanchéité 14, pour ne pas perturber le fonctionnement de cette lèvre d'étanchéité.

Grâce à la présence d'huile dans la chambre collectrice 25, la lèvre d'étanchéité 14 est en permanence lubrifiée, ce qui garantit son bon fonctionnement.

Par ailleurs, pour assurer que la pression d'huile dans la chambre collectrice 25 reste toujours faible, c'est-à-dire dans tous les cas inférieure à 1 bar et de préférence inférieure à 0,5 bar, les fentes 11 de l'armature 7 constituent un passage d'évacuation d'huile qui communique avec un conduit 27 ménagé dans le carter 1 et conduisant jusqu'à un réservoir d'huile.

Le conduit 27 est orienté vers le bas, de sorte que l'huile retourne à son réservoir par gravité.

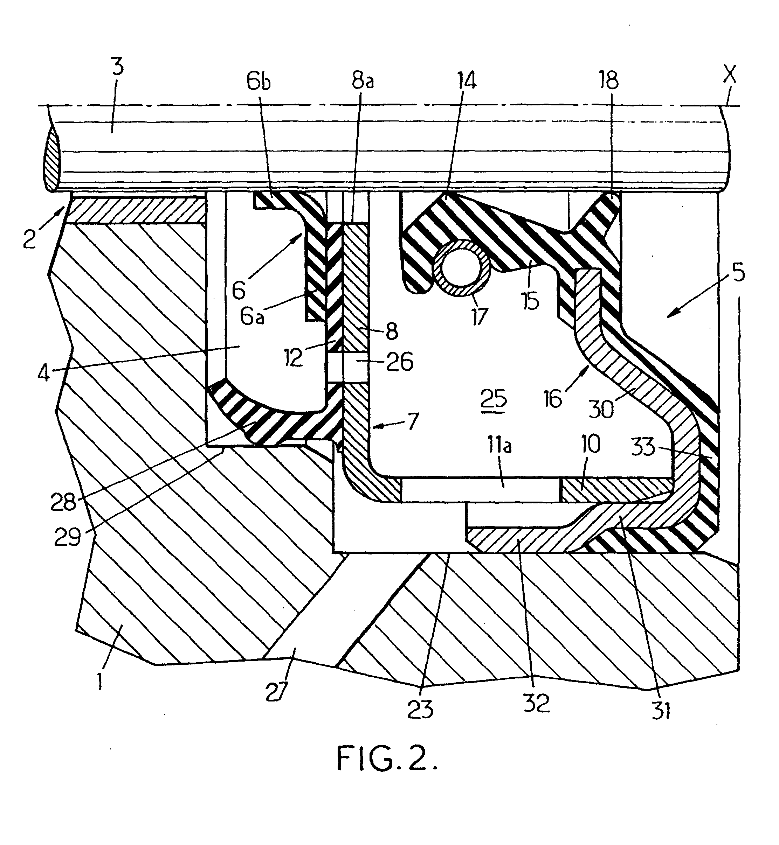

La deuxième forme de réalisation de l'invention, qui est représentée sur la figure 2, est similaire à la première forme de réalisation. Elle ne sera donc pas décrite en détail, et seules les différences par rapport à la première forme de réalisation seront abordées ci-après.

Dans cette deuxième forme de réalisation, l'armature métallique 7 ne présente plus de repli 9, mais uniquement les parois radiale 8 et axiale 10, de sorte que l'armature 7 a sensiblement une section en L.

Par ailleurs, la paroi axiale 10 de l'armature 7 ne comporte pas de fente 11, mais uniquement des orifices 11a.

De plus, la couche d'élastomère 12 qui est adhérisée sur la face intérieure de la paroi radiale 8, se prolonge axialement vers l'intérieur du carter 1 par une lèvre d'étanchéité 28 qui est appliquée en contact étanche contre la paroi intérieure d'une cavité cylindrique 29 du carter 1, sous l'effet de la pression régnant dans le volume intérieur 4.

L'armature 16 a elle aussi une forme différente dans la deuxième forme de réalisation, puisque cette armature comporte :
- une première paroi 30 qui s'étend radialement vers l'extérieur et qui présente une forme courbe s'étendant en biais vers l'extérieur du carter 1,
- et une deuxième paroi 31 qui prolonge la paroi 30 axialement vers l'intérieur du carter 1, cette paroi 31 formant un collet élargi 32 qui est emboîté à force (métal contre métal) dans la cavité cylindrique 23 du carter 1, ce qui suffit pour fixer le joint 5 sur le carter 1.

De plus, le voile d'élastomère 15 se prolonge par une couche d'élastomère 33 qui est adhérisée sur les faces externes des parois 30 et 31, sans recouvrir le collet 32. La partie de la couche d'élastomère 33 qui recouvre la paroi 31 est serrée radialement contre la paroi interne de la cavité cylindrique 23, de façon à former une étanchéité.

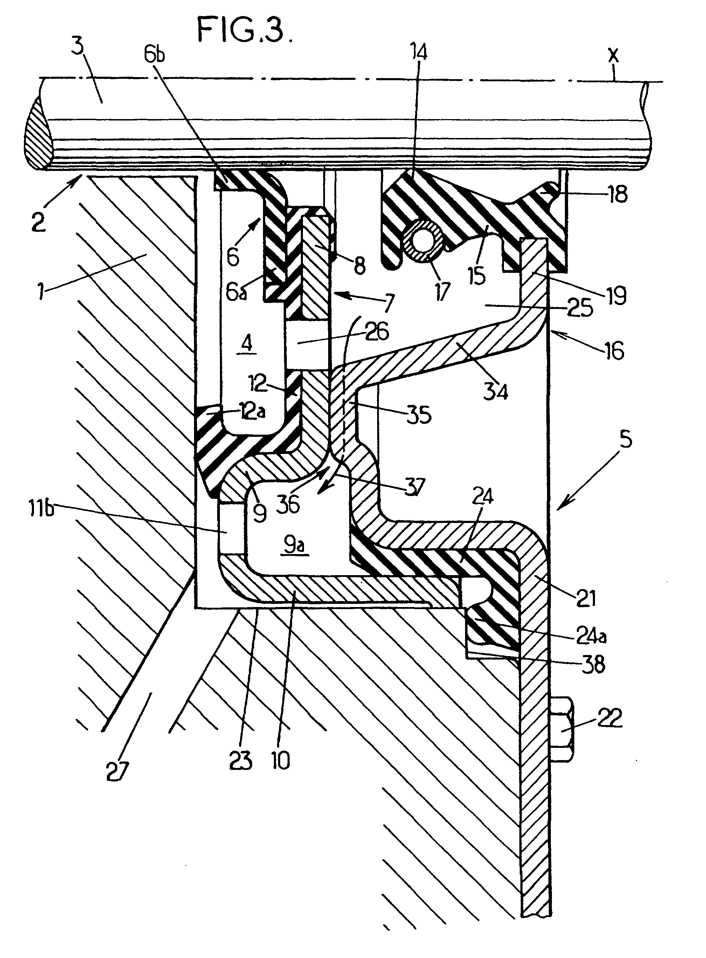

La troisième forme de réalisation de l'invention, qui est représentée sur la figure 3, est également similaire à la première forme de réalisation, mais s'en démarque par les points suivants :
- le repli 9 de l'armature métallique 7 délimite intérieurement un espace vide 9a qui communique avec le conduit 27 par l'intermédiaire d'un ou plusieurs trous axiaux 11b,
- la paroi axiale 10 de l'armature 7 est serrée radialement contre la paroi intérieure de la cavité cylindrique 23,
- la couche d'élastomère 12 de l'armature 7 forme une lèvre d'étanchéité 12a qui est en appui axial contre le fond de la cavité cylindrique 23,
- l'armature 16 comporte, entre sa paroi radiale 19 et sa collerette 21, un embouti annulaire 34 qui s'étend axialement vers l'armature 7 et qui comporte localement des bossages emboutis 35 venant jusqu'au contact de la paroi radiale 8 de l'armature 7, en des positions situées radialement à l'extérieur de l'ajutage calibré 26, ces bossages 35 définissant des passages d'huile 36 au travers desquels l'huile contenue dans la chambre collectrice 25 peut s'écouler vers l'espace vide 9a susmentionné dans la direction de la flèche 37,
- la couche d'élastomère 24 de l'armature 16 tapisse la face radialement extérieure de l'embouti 34 et une partie de la face intérieure de la collerette 21, cette couche d'élastomère étant interposée radialement entre l'embouti 34 et la paroi axiale 10 de l'armature 7, et ladite couche d'élastomère comportant une lèvre d'étanchéité 24a qui est comprimée axialement entre la collerette 21 et un épaulement 38 formé à l'extrémité ouverte de la cavité cylindrique 23.

## Revendications

1. Joint d'étanchéité destiné à être interposé entre, d'une part, un carter (1) ayant un volume intérieur (4) rempli de lubrifiant liquide soumis à une certaine pression, et d'autre part, un arbre (3) sortant dudit carter et tournant autour d'un axe longitudinal (X) avec une certaine vitesse de rotation, ce joint d'étanchéité comprenant une première lèvre d'étanchéité annulaire (14) qui est destinée à être solidarisée avec le carter et à être en contact rotatif glissant avec l'arbre, la première lèvre d'étanchéité étant adaptée pour résister à une première pression limite de lubrifiant inférieure à 1 bar, et pour permettre des vitesses de rotation de l'arbre supérieures à 5000 t/mn, ce joint comportant en outre une deuxième lèvre d'étanchéité annulaire (6) qui est également destinée à être solidarisée avec le carter (1) et à être en contact glissant avec l'arbre (3), la deuxième lèvre d'étanchéité étant adaptée pour permettre des vitesses de rotation de l'arbre supérieures à 5000 t/mn et pour résister à une deuxième pression limite, supérieure à 5 bars, régnant dans le volume intérieur du carter, cette deuxième lèvre d'étanchéité étant destinée à être interposée entre le volume intérieur du carter (4) et la première lèvre d'étanchéité (14), la deuxième lèvre d'étanchéité (6) délimitant avec la première lèvre d'étanchéité (14) une chambre collectrice de lubrifiant (25, et le joint comportant en outre des moyens de by-pass pour faire communiquer le volume intérieur du carter avec la chambre collectrice (25),
**caractérisé en ce que** les moyens de by-pass comportent un ajutage calibré (26) qui by-passe la deuxième lèvre d'étanchéité (6) pour permettre d'injecter un débit de lubrifiant directement du volume intérieur (4) du carter dans la chambre collectrice (25),
**en ce que** la chambre collectrice (25) est dotée d'un passage d'évacuation de lubrifiant (11, 11a, 11b),
**et en ce que** l'ajutage calibré (26), la deuxième lèvre d'étanchéité (6) et le passage d'évacuation de lubrifiant (11, 11a, 11b) sont dimensionnés pour qu'il règne dans la chambre collectrice (25) une pression de lubrifiant au plus égale à ladite première pression limite lorsque le lubrifiant contenu dans le volume intérieur (4) du carter est à une pression au plus égale à la deuxième pression limite.

2. Joint d'étanchéité selon la revendication 1, dans lequel la deuxième lèvre d'étanchéité (6) est réalisée en PTFE.

3. Joint d'étanchéité selon la revendication 1 ou la revendication 2, dans lequel la première lèvre d'étanchéité (14) est réalisée en élastomère.

4. Joint d'étanchéité selon l'une quelconque des revendications précédentes, comportant en outre une troisième lèvre d'étanchéité (18) anti-poussière qui est solidaire du carter (1) et qui est en contact rotatif glissant avec l'arbre (3), cette troisième lèvre d'étanchéité étant disposée à l'opposé de la chambre collectrice (25) par rapport à la première lèvre d'étanchéité (14), de façon à protéger ladite première lèvre d'étanchéité.

5. Joint d'étanchéité selon l'une quelconque des revendications précédentes, dans lequel l'ajutage calibré (26) et la deuxième lèvre d'étanchéité (6) sont dimensionnés pour qu'un débit de lubrifiant compris entre 7 et 100 l/h passe du volume intérieur (4) du carter vers la chambre collectrice (25) lorsqu'il règne dans ledit volume intérieur une pression comprise entre 10 et 20 bars.

6. Joint d'étanchéité selon l'une quelconque des revendications précédentes, dans lequel la deuxième pression limite est comprise entre 10 et 20 bars.

7. Joint d'étanchéité selon l'une quelconque des revendications précédentes, dans lequel les première et deuxième lèvres d'étanchéité (14, 6) sont solidaires respectivement de première et deuxième armatures rigides (16, 7) qui sont fixées l'une à l'autre par emboîtement serré, au moins l'une de ces armatures comportant au moins un évidement (11, 11a, 11b) qui forme le passage d'évacuation de lubrifiant.

8. Dispositif comportant :
- un carter (1) ayant un volume intérieur (4) rempli de lubrifiant liquide soumis à une certaine pression,
- un arbre (3) sortant dudit carter et tournant autour d'un axe longitudinal (X) avec une certaine vitesse de rotation,
- et un joint d'étanchéité (5) selon l'une quelconque des revendications précédentes, interposé entre l'arbre (3) et le carter (1), les première et deuxième lèvres d'étanchéité (14, 6) du joint étant solidarisées avec le carter et étant en contact rotatif glissant avec l'arbre, la deuxième lèvre d'étanchéité (6) étant disposée axialement entre le volume intérieur (4) du carter et la première lèvre d'étanchéité (14), et l'ajutage calibré (26) faisant communiquer directement le volume intérieur (4) du carter avec la chambre collectrice (25).

9. Dispositif d'étanchéité selon la revendication 8, dans lequel la deuxième lèvre d'étanchéité (6) présente une section en forme de L, avec une première branche (6a) solidaire d'une armature rigide (7) sensiblement perpendiculaire à l'axe longitudinal (X) de l'arbre, et avec une deuxième branche (6b) qui s'étend vers le volume intérieur (4) du carter sensiblement parallèlement à l'axe longitudinal (X) de l'arbre.

10. Dispositif d'étanchéité selon la revendication 8 ou la revendication 9, dans lequel la pression de lubrifiant dans le volume intérieur (4) du carter est comprise entre 10 et 20 bars, et la deuxième lèvre d'étanchéité (6) est adaptée pour résister à cette pression de lubrifiant.

11. Dispositif d'étanchéité selon l'une quelconque des revendications 8 à 10, dans lequel les première et deuxième lèvres d'étanchéité (14, 6) sont solidaires respectivement de première et deuxième armatures rigides (16, 7) qui sont fixées l'une à l'autre par emboîtement serré, la deuxième armature (7) comportant au moins un évidement (11) qui forme le passage d'évacuation de lubrifiant, les première et deuxième armatures comportant chacune une paroi cylindrique (20, 9) revêtue d'élastomère qui coopère par emboîtement avec le carter (1) pour fermer respectivement le volume intérieur (4) du carter et la chambre collectrice (25), et la première armature (16) comportant en outre un prolongement extérieur (21) qui est solidarisé directement avec le carter (1).

12. Dispositif d'étanchéité selon l'une quelconque des revendications 8 à 10, dans lequel les première et deuxième lèvres d'étanchéité (14, 6) sont solidaires respectivement de première et deuxième armatures rigides (16, 7) qui sont fixées l'une à l'autre par emboîtement serré, la deuxième armature (7) comportant au moins un évidement (11a) qui forme le passage d'évacuation de lubrifiant, la première armature (16) comportant une paroi cylindrique (31) revêtue d'élastomère qui coopère par emboîtement avec le carter (1) pour fermer de façon étanche la chambre collectrice (25), cette paroi cylindrique étant prolongée par un collet cylindrique élargi (32) rigide qui est en contact direct avec le carter (1) et qui coopère avec ledit carter par emboîtement à force, la deuxième armature (7) étant solidaire d'une lèvre d'étanchéité additionnelle (28) qui coopère avec le carter pour fermer de façon étanche le volume intérieur (4) dudit carter.

13. Dispositif d'étanchéité selon l'une quelconque des revendications 8 à 10, dans lequel les première et deuxième lèvres d'étanchéité (14, 6) sont solidaires respectivement de première et deuxième armatures rigides (16, 7) qui sont fixées l'une à l'autre par emboîtement serré avec interposition d'une couche d'élastomère (24) d'étanchéité, la deuxième armature (7) comportant au moins un évidement (11b) qui forme le passage d'évacuation de lubrifiant, la première armature (16) étant solidaire d'une première lèvre d'étanchéité additionnelle (24a) en élastomère qui coopère avec le carter (1) pour fermer de façon étanche la chambre collectrice (25), la deuxième armature (7) étant solidaire d'une deuxième lèvre d'étanchéité additionnelle (12a) qui coopère avec le carter pour fermer de façon étanche le volume intérieur (4) dudit carter, la première armature (16) étant solidarisée directement avec le carter (1) et étant localement en appui axial contre la deuxième armature (7).

## Patentansprüche

1. Dichtung, die dazu bestimmt ist, zwischen einem Gehäuse (1) einerseits, das einen mit einem flüssigen Schmiermittel gefüllten Innenraum (4) aufweist, das unter einen bestimmten Druck gesetzt wird, und einer aus dem Gehäuse austretenden und sich mit einer bestimmten Drehzahl um eine Längsachse (X) drehenden Welle (3) andererseits eingefügt zu werden, wobei die Dichtung eine erste ringförmige Dichtungslippe (14) umfasst, die dazu bestimmt ist, mit dem Gehäuse verbunden und mit der Welle in Dreh-Gleitkontakt zu sein, wobei die erste Dichtungslippe so ausgeführt ist, dass sie einem ersten Grenzdruck des Schmiermittels von unter 1 bar standhält und Drehzahlen der Welle von über 5.000 U/min ermöglicht, wobei diese Dichtung ferner eine zweite ringförmige Dichtungslippe (6) umfasse die ebenfalls dazu bestimmt ist, mit dem Gehäuse (1) verbunden und mit der Welle (3) In Drehkontakt zu sein, wobei die zweite Dichtungsrippe so ausgeführt ist, dass sie Drehzahlen der Welle von über 5.000 U/min ermöglicht und einem im Innenraum des Gehäuses herrschenden zweiten Grenzdruck von über 5 bar standhält, wobei diese zweite Dichtungslippe dazu bestimmt Ist zwischen dem Innenraum des Gehäuses (4) und der ersten Dichtungslippe (14) eingefügt zu werden, wobei die zweite Dichtungslippe (6) mit der ersten Dichtungslippe (14) eine Kammer zum Sammeln des Schmiermittels (25) begrenzt und die Dichtung ferner Bypass-Mlttel aufweist um eine Verbindung zwischen dem Innenraum des Gehäuses und der Sammelkammer (25) herzustellen,
**dadurch gekennzeichnet, dass** die Bypass-Mittel eine kalibrierte Düse (26) umfassen, die die zweite Dichtungslippe (6) umgeht, um eine Schmiermittelmenge direkt vom Innenraum (4) des Gehäuses in die Sammelkammer (25) einzuspritzen,
dass die Sammelkammer (25) mit einem Durchlass zum Ableiten von Schmiermittel (11, 11a, 11b) versehen ist,
und dass die kalibrierte Düse (26), die zweite Dichtungslippe (6) und der Durchlass zur Schmiermittelableitung (11, 11a, 11b) so dimensioniert sind, dass in der Sammelkammer (25) ein Schmiermitteldruck herrscht, der höchstens dem ersten Grenzdruck entspricht, wenn das im Innenraum (4) des Gehäuses enthaltene Schmiermittel einen Druck aufweist, der höchstens dem zweiten Grenzdruck entspricht.

2. Dichtung nach Anspruch 1,
bei der die zweite Dichtungslippe (6) aus PTFE hergestellt ist.

3. Dichtung nach Anspruch 1 oder Anspruch 2,
bei der die erste Dichtungslippe (14) aus Elastomer hergestellt ist.

4. Dichtung nach einem der vorhergehenden Ansprüche,
die ferner eine dritte Dichtungslippe (18) als Staubschutz umfasst, die mit dem Gehäuse (1) verbunden und mit der Welle (3) in Dreh-Gleitkontakt ist, wobei die dritte Dichtungslippe in bezug auf die erste Dichtungslippe (14) an der entgegengesetzten Seite der Sammelkammer (25) zum Schutz der ersten Dichtungslippe angeordnet ist.

5. Dichtung nach einem der vorhergehenden Ansprüche,
bei der die kalibrierte Düse (26) und die zweite Dichtungslippe (6) so dimensioniert sind, dass eine Schmiermittelmenge von 7 bis 100 l/h vom Innenraum (4) des Gehäuses In die Sammelkammer (25) gelangt, wenn im Innenraum ein Druck zwischen 10 und 20 bar herrscht

6. Dichtung nach einem der vorhergehenden Ansprüche,
bei der der zweite Grenzdruck zwischen 10 und 20 bar liegt.

7. Dichtung nach einem der vorhergehenden Ansprüche,
bei der die erste und die zweite Dichtungslippe (14, 6) mit einer ersten bzw. zweiten steifen Armierung (16, 7) verbunden sind, die durch Presseinpassen aneinander befestigt sind, wobei wenigstens eine dieser Armierungen wenigstens eine Aussparung (11, 11a, 11b) aufweist, die den Durchlass zur Schmiermittelableitung bildet

8. Vorrichtung mit:
- einem Gehäuse (1), das einen Innenraum (4) aufweist, der mit einem flüssigen Schmiermittel gefüllt ist, das unter einen bestimmten Druck gesetzt wird,
- einer aus dem Gehäuse austretenden und sich mit einer bestimmten Drehzahl um eine Längsachse (X) drehenden Welle (3),
- und einer zwischen der Welle (3) und dem Gehäuse (1) eingefügten Dichtung (5) nach einem der vorhergehenden Ansprüche, wobei die erste und die zweite Dichtungslippe (14, 6) der Dichtung mit dem Gehäuse verbunden und mit der Welle umlaufend in Dreh-Gleitkontakt ist, wobei die zweite Dichtungslippe (6) axial zwischen dem Innenraum (4) des Gehäuses und der ersten Dichtungslippe (14) angeordnet ist und die kalibrierte Düse (26) zwischen dem Innenraum (4) des Gehäuses und der Sammelkammer (25) eine direkte Verbindung herstellt

9. Dichtungsvorrichtung nach Anspruch 8,
bei der die zweite Dichtungslippe (6) einen L-förmigen Querschnitt aufweist, mit einem ersten Schenkel (6a), der mit einer steifen Armierung (7) im Wesentlichen lotrecht zur Längsachse (X) der Welle verlaufend verbunden ist, und einem zweiten Schenkel (6b), der im Wesentlichen parallel zur Längsachse (X) der Welle in Richtung des Innenraums (4) des Gehäuses verläuft.

10. Dichtungsvorrichtung nach Anspruch 8 oder Anspruch 9,
bei der der Schmiermitteldruck im Innenraum (4) des Gehäuses zwischen 10 und 20 bar liegt, und die zweite Dichtungslippe (6) so ausgeführt ist, dass sie dem Schmiermitteldruck standhält.

11. Dichtungsvorrichtung nach einem der Ansprüche 8 bis 10,
bei der die erste und die zweite Dichtungslippe (14, 6) mit einer ersten bzw. zweiten steifen Armierung (16, 7) verbunden sind, die durch Presseinpassen aneinander befestigt sind, wobei die zweite Armierung (7) wenigstens eine Aussparung (11) aufweist, die den Durchlass zur Schmiermittelableitung bildet, wobei die erste und die zweite Armierung jeweils eine mit Elastomer beschichtete zylindrische Wand (20, 9) umfasst, die mit dem Gehäuse (1) durch Einstecken zusammenwirkt, um den Innenraum (4) des Gehäuses bzw. die Sammelkammer (25) abzuschließen, und wobei die erste Armierung (16) zudem eine äußere Verlängerung (21) aufweist, die mit dem Gehäuse (1) direkt verbunden ist.

12. Dichtungsvorrichtung nach einem der Ansprüche 8 bis 10,
bei der die erste und die zweite Dichtungslippe (14, 6) mit einer ersten bzw. zweiten steifen Armierung (16, 7) verbunden sind, die durch Presseinpassen aneinander befestigt sind, wobei die zweite Armierung (7) wenigstens eine Aussparung (11a) aufweist, die den Durchlass für die Schmiermittelableitung bildet, wobei die erste Armierung (16) eine mit Elastomer beschichtete zylindrische Wand (31) umfasst, die mit dem Gehäuse (1) durch Einstecken zusammenwirkt, um die Sammelkammer (25) dicht abzuschließen, wobei die zylindrische Wand durch einen steifen, erweiterten, zylindrischen Kragen (32) verlängert ist, der in direktem Kontakt mit dem Gehäuse (1) ist und der mit dem Gehäuse durch kraftvolles Einstecken zusammenwirkt, wobei die zweite Armierung (7) mit einer zusätzlichen Dichtungslippe (28) verbunden ist, die mit dem Gehäuse zusammenwirkt, um den Innenraum (4) des Gehäuses dicht abzuschlieBen.

13. Dichtungsvorrichtung nach einem der Ansprüche 8 bis 10,
bei der die erste und die zweite Dichtungslippe (14, 6) mit einer ersten bzw. zweiten steifen Armierung (16, 7) verbunden sind, die unter Einfügen einer Elastomerdichtungsschicht (24) durch Presseinpassen aneinander befestigt sind, wobei die zweite Armierung (7) wenigstens eine Aussparung (11b) aufweist, die den Durchlass zur Schmiermitbelableitung bildet, wobei die erste Armierung (16) mit einer ersten zusätzlichen Dichtungsilppe (24a) aus Elastomer verbunden ist, die mit dem Gehäuse (1) zusammenwirkt, um die Sammelkammer (25) dicht abzuschließen, wobei die zweite Armierung (7) mit einer zweiten zusätzlichen Dichtungslippe (12a) verbunden ist, die mit dem Gehäuse zusammenwirkt, um den Innenraum (4) des Gehäuses dicht abzuschließen, wobei die erste Armierung (16) mit dem Gehäuse (1) direkt verbunden ist und stellenweise auf der zweiten Armierung (7) axial aufliegt.

## Claims

1. A gasket designed to be inserted between a housing (1) with an interior volume (4) filled with liquid lubricant and subjected to a certain level of pressure on the one hand and a shaft (3) projecting out from said housing and rotating at a certain rotation speed about a longitudinal axis (X) on the other hand, this gasket comprising a first annular sealing lip (14) which is designed to be joined to the housing and placed in sliding rotary contact with the shaft, the first sealing lip being designed to withstand a first lubricant threshold pressure below 1 bar and to permit shaft rotation speeds in excess of 5000 rpm,
this gasket also having a second annular sealing lip (6) which is also designed to be joined to the housing (1) and to be in sliding contact with the shaft (3), the second sealing lip being designed to permit shaft rotation speeds in excess of 5000 rpm and to withstand a second threshold pressure, in excess of 5 bar, prevailing in the interior volume of the housing, this second sealing lip being designed so that it can be inserted between the interior volume of the housing (4) and the first sealing lip (14), the second sealing lip (6) delimiting, in conjunction with the first sealing lip (14), a lubricant collecting chamber (25) and the gasket also including bypass means for providing communication between the interior volume of the housing and the collecting chamber (25),
**characterized in that** the bypass means include a calibrated nozzle (26) bypassing the second sealing lip (6) so as to enable injection of a flow of lubricant from the interior volume (4) of the housing into the collecting chamber (25),
**in that** the collecting chamber (25) has a discharge passage (11, 11a, 11b) for the lubricant,
and **in that** the calibrated nozzle (26), the second sealing lip (6) and the lubricant discharge passage (11, 11a, 11b) are so dimensioned that a lubricant pressure prevailing in the collecting chamber (25) is at most equal to said first threshold pressure when the lubricant contained in the interior volume (4) of the housing is at a pressure at most equal to the second threshold pressure.

2. A gasket as claimed in claim 1, wherein the second sealing lip (6) is made from PTFE.

3. A gasket as claimed in claim 1 or claim 2, wherein the first sealing lip (14) is made from elastomer.

4. A gasket as claimed in any one of the preceding claims, additionally having a third anti-dust sealing lip (18) which is joined to the housing (1) and which is in sliding rotary contact with the shaft (3), this third sealing lip being arranged opposite the collecting chamber (25) relative to the first sealing lip (14) in order to protect said first sealing lip.

5. A gasket as claimed in any one of the preceding claims, wherein the calibrated nozzle (26) and the second sealing lip (6) are so dimensioned that lubricant flows at a rate ranging between 7 and 100 1/h from the interior volume (4) of the housing to the collecting chamber (25) if a pressure ranging between 10 and 20 bar prevails in said interior volume.

6. A gasket as claimed in any one of the preceding claims, wherein the second threshold pressure is between 10 and 20 bar.

7. A gasket as claimed in any one of the preceding claims, wherein the first and second sealing lips (14, 6) are joined respectively to first and second rigid frame (16, 7) which are fixed one to the other in a clamped fit, at least one of these frames having at least one recess (11, 11a, 11b) which forms the discharge passage for the lubricant.

8. A device comprising:
- a housing (1) with an interior volume (4) filled with liquid lubricant which is subjected to a certain level of pressure,
- a shaft (3) projecting out from said housing and rotating at a certain rotation speed about a longitudinal axis (X),
- and a gasket (5) as claimed in any one of the preceding claims, inserted between the shaft (3) and the housing (1), the first and second sealing lips (14, 6) of the gasket being joined to the housing and in sliding rotary contact with the shaft, the second sealing lip (6) being disposed axially between the interior volume (4) of the housing and the first sealing lip (14) and the calibrated nozzle (26) providing direct communication between the interior volume (4) of the housing and the collecting chamber (25).

9. A sealing device as claimed in claim 8, wherein the second sealing lip (6) has an L-shaped cross section, with a first arm (6a) joined to a rigid frame (7) substantially perpendicular to the longitudinal axis (X) of the shaft and having a second arm (6b) which extends towards the interior volume (4) of the housing substantially parallel with the longitudinal axis (X) of the shaft.

10. A sealing device as claimed in claim 8 or claim 9, wherein the pressure of the lubricant in the interior volume (4) of the housing is between 10 and 20 bar and the second sealing lip (6) is designed to withstand this pressure.

11. A sealing device as claimed in any one of claims 8 to 10, wherein the first and second sealing lips (14, 6) are joined respectively to first and second rigid frames (16, 7) which are fixed one to the other in a clamp fit, the second frame (7) having at least one recess (11) which forms the lubricant discharge passage, the first and second frames each having a cylindrical wall (20, 9) covered with elastomer which co-operates to provide a fitting on the housing (1) to close off respectively the interior volume (4) of the housing and the collecting chamber (25), and the first frame (16) also has an external extension (21) which is joined directly to the housing (1).

12. A sealing device as claimed in any one of claims 8 to 10, wherein the first and second sealing lips (14, 6) are joined respectively to first and second rigid frames (16, 7) which are fixed one to the other in a clamp fit, the second frame (7) having at least one recess (11a) which forms the lubricant discharge passage, the first frame (16) having a cylindrical wall (31) covered with elastomer which co-operates to form a fitting on the housing (1) to provide a sealed closure of the collecting chamber (25), this cylindrical wall being extended by a rigid, enlarged cylindrical collet (32) which is in direct contact with the housing (1) and which co-operates with said housing by means of a force-fit, the second frame (7) being joined to an additional sealing lip (28) which co-operates with the housing to seal off the interior volume (4) of said housing.

13. A sealing device as claimed in any one of claims 8 to 10, wherein the first and second sealing lips (14, 6) are joined respectively to first and second rigid frames (16, 7), which are fixed one to the other by a clamp fit with a layer of elastomer seal (24) inserted between them, the second frame (7) having at least one recess (11b) which forms the lubricant discharge passage, the first frame (16) being joined to a first additional elastomer sealing lip (24a) which co-operates with the housing (1) to seal off the collecting chamber (25), the second frame (7) being joined to a second additional sealing lip (12a) which co-operates with the housing to seal off the interior volume (4) of said housing, the first frame (16) being joined directly to the housing (1) and being axially supported against the second frame (7) at local points.
